# EUROPEAN PATENT SPECIFICATION

(11) **EP 2 255 921 B1**
(45) Date of publication and mention of the grant of the patent: **19.09.2012**
(21) Application number: 09715033.8
(22) Date of filing: 17.02.2009
(51) Int. Cl.: B23Q 1/00, B23Q 1/01, B23Q 1/56

(54) **MACHINE TOOL**
MASCHINENWERKZEUG
MACHINE-OUTIL

(30) Priority: 29.02.2008 JP 2008050338
(43) Date of publication of application: 01.12.2010
(73) Proprietor: Horkos Corp, Fukuyama-shi Hiroshima-ken 720-0831 (JP)
(72) Inventor: SUGATA, Shinsuke, Fukuyama-shi Hiroshima 720-0831 (JP); IKEDA, Kunihiro, Fukuyama-shi Hiroshima 720-0831 (JP)
(74) Representative: Kramer - Barske - Schmidtchen
(86) International application number: PCT/JP2009/052605
(87) International publication number: WO 2009/107508

(56) References cited:
- EP-A1- 0 452 735
- EP-A1- 1 182 004
- EP-A1- 1 329 282
- EP-A1- 1 762 332
- JP-A- 10 315 077
- JP-A- 2001 009 652
- JP-A- 2005 034 920
- JP-A- 2006 255 859
- JP-T- 2003 519 577

## Description

### FIELD OF THE INVENTION

The invention relates to a machine tool (machining center) comprising a base fixed on a floor, a machining head and a sliding mechanism for displacing the machining head in a longitudinal direction, in a lateral direction or in a vertical direction.

### BACKGROUND OF THE INVENTION

A machine tool cuts a work by moving a machining head vertically, laterally and longitudinally on making a base fixed on the floor a reference plane for deciding machining precision. For example, a machine tool for cutting by moving the machining head vertically for a vertical direction is disclosed in a patent document 1.

The base is a heavy product which is molded by casting or which has steel sheet welding structure, and must be precise to provide the reference plane in cutting. As for a machine tool as shown in the patent document 1, because the machining head cuts in front of the base, cutting chips generated in cutting never lay thick on the base. Therefore, the base is not thermally transformed by the heat of the cutting chips.
[Patent document 1] Japanese patent publication No. 2006-255859
Other machine tools are known from EP 1762 332 A1, EP 1329 282 A1, EP 1182 004 A1 and EP 0452 735 A1.

### SUMMARY OF THE INVENTION

### PROBLEMS TO BE SOLVED BY THE INVENTION

In the machine tool according to patent document, a beam is installed and held on a vertical surface of the base so that a work is opposite to the machining head moving vertically. The cutting chips are scattered from the machining head and fall around the head. However, parts of the cutting chips touch a junction portion of the beam and the vertical reference plane of the base and spread the heat thereon.
The present invention aims to provide a machine tool to settle the above-mentioned problem.

### MEANS TO SOLVE THE PROBLEM

The machine tool of the present invention comprises a machining head for cutting a work, a sliding mechanism for moving the machining head vertically, laterally and longitudinally whereas maintaining the machine head facing toward a horizontally longitudinal direction, a base constituted by connecting structures installed upright on left and right sides with use of lateral beams, having a first reference plane for mounting guide rails for guiding the sliding mechanism, besides having second reference planes on the front of the left and right structures, a table installed in front of the left and right second reference planes to support a work to be cut with the machining head, and a beam extending forward from the second reference planes and holding the table laterally.

### EFFECT OF INVENTION

According to the present invention, because the table is supported from left and right sides so as not to arrange the structures for requiring the machining precision just under the machining head moving longitudinally, it is possible to provide a machine tool not for dropping down and accumulating cutting chips.

Besides, in a model for integrating a column and a base, the rigidity is increased and the weight is diminished by decreasing combined portions.

### BRIEF DESCRIPTION OF THE DRAWINGS

[Figure 1] This is a perspective view of a machine tool 1 of an embodiment of the invention.
[Figure 2] This is an assembly view of a machine tool 10.
[Figure 3] This is a perspective view of a base of the machine tool 10.
[Figure 4] This is three sides view.
[Figure 5] This is a perspective view showing a state that a processing chamber is installed in the machine tool 10.
[Figure 6] This is a perspective view of the machine tool 10 by another embodiment.
[Figure 7] This is a perspective view of a base 201 of the machine tool 10.
[Figure 8] This is a perspective view of a machine tool 30 by another embodiment.
[Figure 9] This is a perspective view showing a base 272 and a sliding mechanism 300 of the machine tool 30.
[Figure 10] This is a perspective view of a machine tool 40 of another embodiment.
[Figure 11] This is a view showing a processing chamber of the machine tool 40.
[Figure 12] This is a view comparing two kinds of beams 400, 470.
[Figure 13] This is a view of a machine tool by another embodiment.

### EXPLANATION OF REFERENCED NUMERALS

- 1: a machine tool
- 200: a base
- 221: a guide rail
- 300: a sliding mechanism
- 310: a Y slide
- 312: a guide block
- 313: a guide rail
- 320: an X slide
- 324: a front plate portion
- 325: a box frame portion
- 330: a Z slide
- 332: a box frame portion
- 400: a beam
- 410, 420, 471, 472: a beam portion
- 450: a table
- 500: a controller
- 600: a machining head

### PREFERRED EMBODIMENT OF THE INVENTION

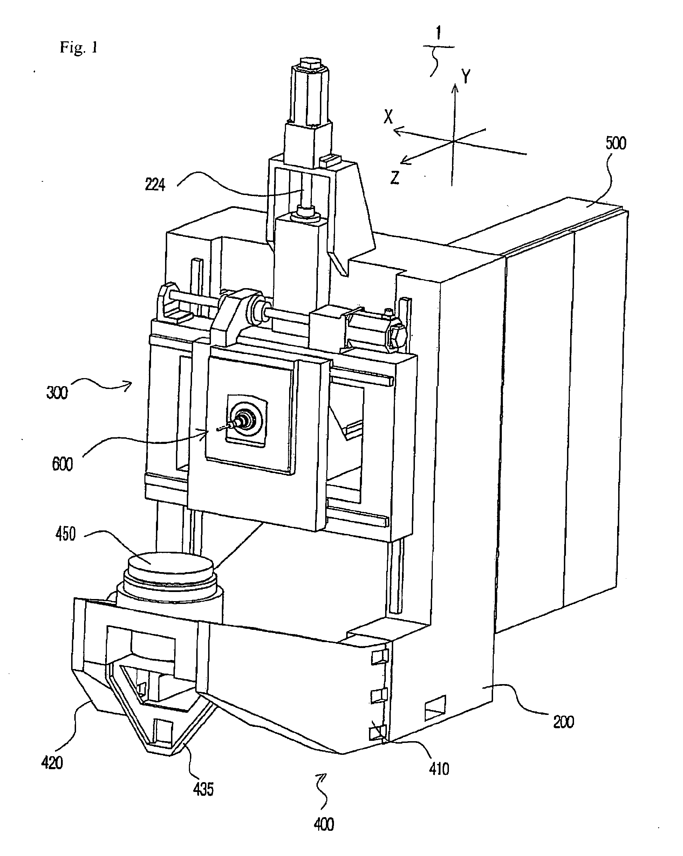

In the following explanation, a three-dimensional coordinate corollary of XYZ is assumed that an X direction, a Y direction and a Z direction are made a lateral direction, a vertical direction and a longitudinal direction, respectively. As shown in Fig. 1, a machine tool 1 of the present invention comprises a base 200, a sliding mechanism 300, a beam 400 and a controller 500. The sliding mechanism 300 moves a machining head 600 in the Y direction, in the X direction, and finally in the Z direction.

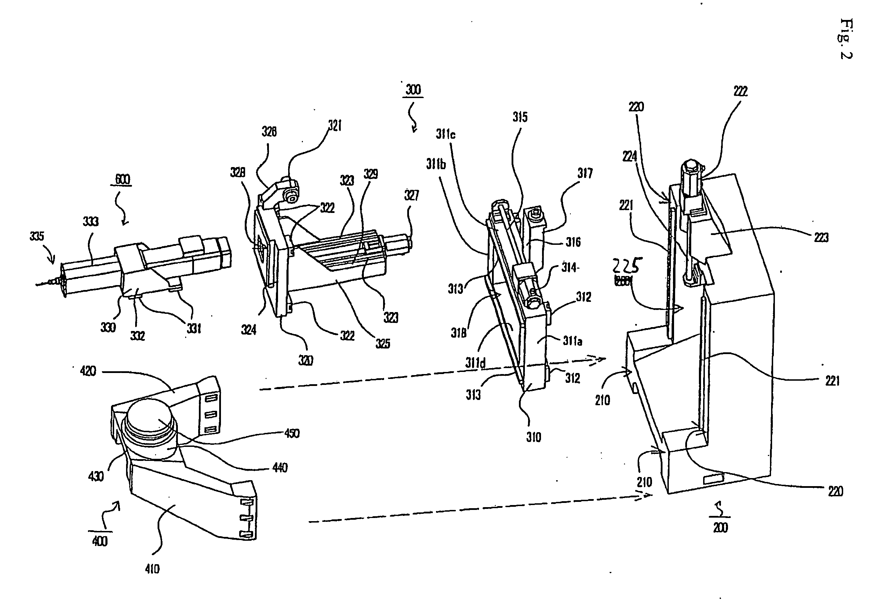

Fig. 2 shows laminate structure of the sliding mechanism 300. In this figure, a motor table 223 is arranged on the top surface of the base 200, and a servomotor 222 with a screw shaft 224 having Y-directional downward length is installed. Guide rails 221 extending in the Y direction are provided on the left and right vertical surfaces of the base 200 so as to load the sliding mechanisms 300.

A Y slide 310 is formed in a rectangular frame with more frontage than depth having a through hole 318 at the center viewed from the front. The top and bottom ends of vertical beam portions 311a, 311b of left and right each having a quadrangle section are respectively connected by lateral beam portions 311c, 311d. More than one guide block 312 for engaging with each left and right guide rail 221 extending in the Y direction on the base 200 is installed on each back surface of the vertical beam portions 311a, 311b. The Y slide 310 is supported slidably in the Y direction on the base 200 by engaging the left and right guide blocks 312 to the left and right guide rails 221 laid on the base 200. Besides, a nut body 317, which is screwed with the screw shaft 224 of the servomotor 222 installed on the base 200, is provided on the back surface of the lateral beam portion 311c of the Y slide 310.

Guide rails 313 extending in the X direction are laid on the front vertical surfaces of the vertical lateral beam portions 311c, 311d in the front of the Y slide 310. Besides, a servomotor 314 is fixed on the top surface of a lateral beam portion 311c by a holding portion 316, rotating a screw shaft 315 around an X axis.

An X slide 320 is installed on the front of the Y slide 310. The X slide 320 comprises a rectangular front plate 324 with more frontage than depth and a box frame portion 325. The rectangular front plate 324 has a circular through hole 328 at the center viewed from the front. The box frame portion 325 is formed as one with the front plate portion 324, extending rearward from the center of the back surface. Besides, the box frame portion 325 has an upwardly opening U letter cross section.

Plenty of guide blocks 322 each extending in the X axis direction are installed at the four corners of the back surface of the front plate 324 of the X slide 320. The guide blocks 322 respectively engage with the guide rails 313 laid on the front surfaces of the lateral beam portions of the Y slide 310, and the X slide 320 is supported slidably in the X axis direction for the Y slide 310. The box frame portion 325 extending in back of the front plate portion 324 passes through a through hole 225 of the base 200 and a through hole 318 of the Y slide 310.

A nut body 321 for screwing on the screw shaft 315 of the servomotor 314 installed on the Y slide 310 is provided on the left side of the top surface of the front plate portion 324 with a fitting member 326. Behind the box frame portion 325, is provided a servomotor 327 having a screw shaft 329 in the Z direction. Guide rails 323 extending in Z axis direction are laid on the top surfaces of side walls of the box frame portion 325 of the X slide 320, respectively Here, the side walls face to face.

A machining head 600 is installed on a Z slide 330. The Z slide 330 comprises a box frame portion 332 having an upwardly opening U letter cross section and a ram 333 for axially transmitting a rotating spindle 335 of the machining head 600 rotatively. At the four corners of the bottom of the box frame portion 332, are installed guide blocks 331 for engaging on the guide rails 323 of the X slide 320. A nut body (not-illustrated) for screwing on a screw shaft 329 is provided on the bottom surface of the box frame portion 332, moving longitudinally in the Z direction in the X slide 320.

A ring seal is arranged on a front inside peripheral edge of a through hole 328 of the X slide, outwardly fitting on a cylindrical periphery of the tip of the Z slide 330. According to this, the cutting chips are prevented from invading into the X slide 320.

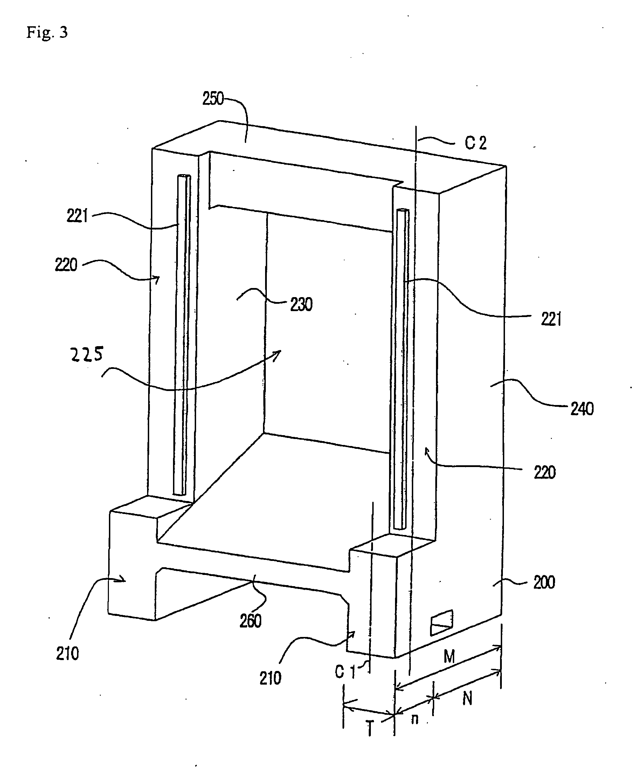

Fig. 3 is a perspective view of the base 200. The base 200 is fixed on a floor, having structures 230, 240 installed upright on the left and right sides and each having high rigidity and large mass. The structures 230, 240 are connected by top and bottom lateral beam portions 250, 260. Each of the structures 230, 240 has a vertical surface as a reference plane in front of the front surface. The vertical surface is separated in the upper portion and the lower portion. The lower vertical surface 210 and the upper vertical surface 220 are not continuous. The upper vertical surface (the first reference plane) 220 extends far back from the lower vertical surface (the second reference plane) 210 by a width "n" in order to shorten the length of the beam 400 when carrying the sliding mechanism 300 on the vertical surface 220. The lower vertical surface 210 forms a reference plane for fixing the beam 400, on the other hand, the upper vertical surface 220 has the guide rails 221 for guiding the sliding mechanism 300 in the Y direction. On the lower vertical surface 210, are provided bolt holes for fitting the beam 400. In each of the structures 230, 240, the widths M, N in the depth direction are longer than the width T of the vertical surface in the lateral direction, and the upper and lower vertical surfaces 210, 220 are supported by large rigidity on the depth. Each of the structures 230, 240 is only part of a unified casting in molding. However, in designing, each structure is preferably designed so that center lines C1, C2 of an extending direction of the upper and lower vertical surfaces are on the same straight line in a view from the front surface. Besides, each of the structures 230, 240 can be made hollow, or formed in a structure comprising forward and rearward surfaces and boards for connecting these surfaces, or a board-shape or column-shape structure surrounded by four sides.

Although it is desirable that the vertical surfaces 210, 220 are literally vertical, even if they are not vertical, a horizontal component of the force affected on the surface may be only larger than a perpendicular component thereof.

Legs adjustable in the height are provided at four corners of the lower horizontal surface of the base 200 (not-illustrated), and the center of gravity of the base 200 is within an area surrounded by the legs. The greater part of an interval between the structures 230, 240 forms an open space, and therein, the sliding mechanism 300 is installed. In this way, the beam portions 410, 420 extend from both sides of the machine tool, and therefore, a space just under the machining head 600 can be opened broadly.

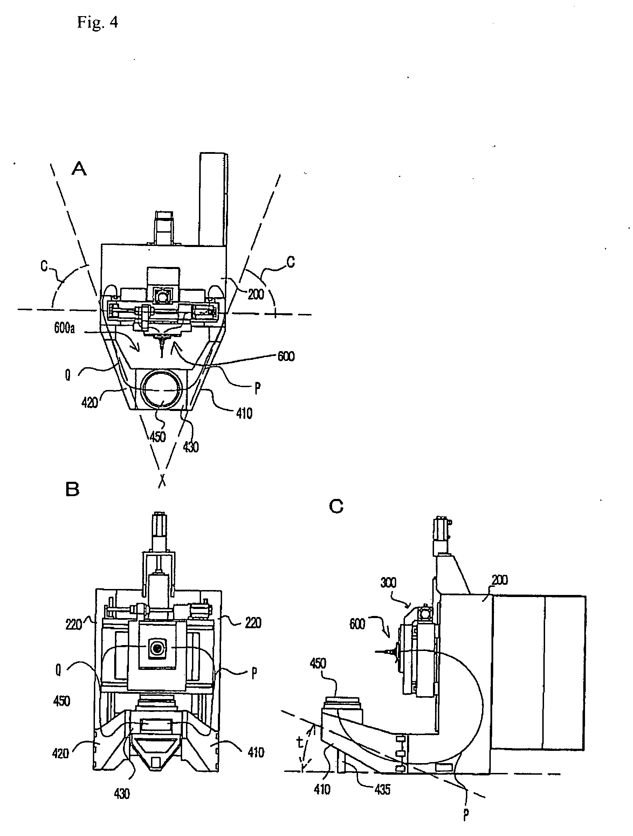

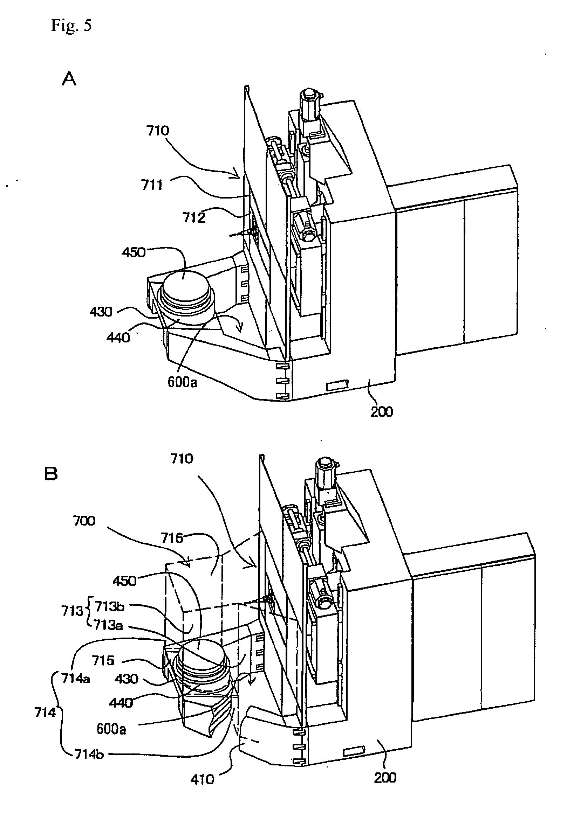

In Fig.2, the beam 400 comprises the right and left beam portions 410, 420 and a lateral beam portion 430. The beam portions 410, 420 extend forward-upwardly from the left and right vertical surfaces 210 and the lateral beam portion 430 is bridged therebetween. Near the center of the lateral beam portion 430, is provided a table 450 for installing a work. The table 450 is rotatable around a vertical axis by a rotation driving portion 440. The top surface of the lateral beam portion 430 is formed in slant downwardly to the base 200. The beam portions 410, 420 and the lateral beam portion 430 are structurally high rigid, but optionally modified as depending on the use of the machine tool. A space 600a (see Figs. 4, 5) from the floor to the machining head 600 is formed by the beam portions 410, 420 and the lateral beam portion 430.

Fig. 4 illustrates three figures of the machine tool 1. In this embodiment, a power loop is divided in two portions (P, Q) by the beam portions 410, 420 supporting the table 450, each caught on the vertical surfaces 210 of the structures 230, 240 in the base 200. That is, the left and right structures 230, 240 support the table 450 by their large mass. Then, the divided power loops join on the sliding mechanism 300 and reach the machining head 600.

The structures 230, 240 separated in left and right directly transmit the powers P, Q divided from the beam 400 to the sliding mechanism 300. The mass of the base 200 puts on the separated structures 230, 240, and besides, in the base 200, center lines extended from the upper and lower vertical surfaces 210, 220 are existed on the center lines of the structures 230, 240. Therefore, there is an affect that the use efficiency of materials is good because transmission loss of the power is little. The sliding mechanism 300 can check a reaction to the working of the machining head by a width interval between the left and right guide rails 221. The more the width interval is large, the more the stability increases, and the separated structures 230, 240 can check the reaction efficiently.

The beam portions 410, 420 of the beam 400 rise from the lower part to a position to be machined by the machining head 600 in front of the base. The beam portions 410, 420 extend from the Z direction to the inside each other by an angular C in a view from the top (Fig. 4A), besides extending upwardly from the base 200 to the table 450 by an angular t for the horizontal direction. Accordingly, the distance to the table 450 is shortened, thereby improving the rigidity.

Since the longitudinally moving machining head 600 is loaded on the Z slide of the last stage, the center of gravity position of the machine tool 1 is not changed by the longitudinal movement very much. The position changes within an area surrounded by legs which are provided at four corners of the base. Besides, since the vertically moving Y slide 310 is loaded on the first stage, the center of gravity moves only vertically. Accordingly, although the base 200 of a heavy product rises up in appearance, the machine tool 1 is stable for the floor.

A prop 435 is provided to the lower part of the lateral beam portion 430 of the beam 400 for the floor on which the machine tool 1 is installed, holding the weight of the machine tool 1 (See Figs. 1, 4C.). However, since the weight of the machine tool 1 is basically held by the base 200, the prop 435 serves as a spare. Such a prop can be provided on the left beam 410 and/or the right beam 420.

Fig. 5 is a perspective view wherein a machining chamber 700 is provided to the machine tool 1 of this embodiment. In Fig. 5B, the machining chamber 700 is drawn in a broken line. A main surface 710 of the base side of the machining chamber is provided over the lower vertical surface in front of the base 200. The main surface 710 has a width of the base 200 and a height over the top of the upper part, and a large opening 711 is provided so that the machining head 600 can move vertically and laterally. A slide board 712 is provided so as to cover a gap between the base 200 and the machining head 600. The slide board 712 slides following the vertical and lateral movements of the machining head 600, thereby preventing the cutting chips scattered from the machining head 600 from going into the sliding mechanism 300.

The main surface 710 of the machining chamber 700 is supported with the plural points of the vertical surface of the base. Each of left and right side surfaces 713 of the machining chamber 700 comprises a side surface 713a of the main surface 710 side and a side surface 713b of the front side, extending forwardly from the main surface 710 inside the beam portions 410, 420 of the beam 400.

The left and right side surfaces 713a of the machining chamber 700 continue to the base side of the lateral beam portion 430, extending vertically the lateral beam portion 430. On the other hand, the left and right surfaces 713b extend from the main surface 710 to the length over the front of the lateral beam portion 430 above the left and right beam portions 410, 420 and the lateral beam portion 430.

The front surface 714 of the machining head 700 comprises a surface 714a for connecting the left and right side surfaces 713b in front of the lateral beam portion 430 over the lateral beam portion 430 and a surface 714b for connecting the left and right side surfaces 713a before the base 200 side of the lateral beam portion 430 under the lateral beam portion 430. The machining chamber 700 has a wall portion 715 above the lateral beam portion 430. The wall portion 715 passes so as to cover the lateral beam portion 430, besides placing the table 450 inside the machining chamber 700. The wall portion 715 is connected to the surfaces 714b inside the lateral beam portion 430. The wall portion 715 slants along a slope inclining to the base side of the lateral beam portion 430 with leaving some space. That is, the wall portion 715 slants so as to cave in the base side for the horizontal plane so that the cutting chips generated by the machining head 600 can easily slide. Although it is not illustrated, an interval between the wall portion 715 and the table 450 is sealed. The top surface of the machining chamber is covered with a top board 716.

Accordingly, the machining head 600 makes a space in front of the main surface 710 moving vertically, laterally and longitudinally airtight. A hopper portion is provided under the machining chamber 700 to accumulate the cutting chips (not illustrated). The beam portions 410, 420 and the lateral beam portion 430 are located outside the machining chamber 700. On the other hand, a surface of the table 450, on which the work is installed, is exposed into the machining chamber 700.

When the machining head 600 cuts, the cutting chips are scattered following the rotations of the machining head 600 and drop down a space 600a just under the machining head 600 in the machining chamber 700. Parts of the cutting chips drop along the slope of the wall portion 715 covering the lateral beam portion 430. Besides, because the wall portion 715 does not directly contact with the lateral beam portion 430, heat of the cutting chips dropped on this is never carried to the lateral beam portion 430. The same is the case with the left and right beam portions 410, 420. Because the right and left sides 713 of the machining chamber 700 do not directly contact with the beam portions 410, 420, the heat of the scattered cutting chips is never carried to the beam portions 410, 420.

The beam portions 410, 420 of the beam 400 and the lateral beam portion 430 have less mass than the base 200, whereas they are not affected by the heat of cutting chips, and therefore, there is little disorder. On the other hand, a conveyer (not-illustrated) is provided below the base 200 to transport cutting chips generated at the time when the work is cut by the machining head 600, behind the base. The conveyer is located at the lowest portion of the machining chamber and turned to the Z axis direction behind the machine tool 1 (sometimes to the X axis direction). Coolant is supplied to cut the work smoothly and to cool the cutting place while the machining head 600 is machining the work. However, the coolant also drops into the hopper portion along the wall surfaces of the machining chamber by gravitation like the cutting chips.

The base 200 of this embodiment has the weight concentrated to the structures 230, 240, and the interval between the structures 230, 240 is connected by the lateral beam portions 250, 260. On the other hand, although the left and right beam portions 410, 420 are apart from each other, they are supported by the high-rigid structures 230, 240. Besides, the structures 230, 240 also support the Y directional guide rails 221. Therefore, the structures 230, 240 of the base 200 can support the beam 400 and the sliding mechanism 300 extremely intensively and straightly. Accordingly, because the weight and the rigidity of materials which are used for the base 200 are concentrated only on the structures 230, 240, the materials can be reduced. Here, to increase the rigidity, the structures 230, 240 do not need being cast iron or a lump of the steel, but may be made only a hollow structure having a thickness by casting or steel-sheet-welding.

Because the beam portions 410, 420 can be opened until the interval of the upper and lower guide rails 221, an opening of the space 600a in which the cutting chips fall can be enlarged.

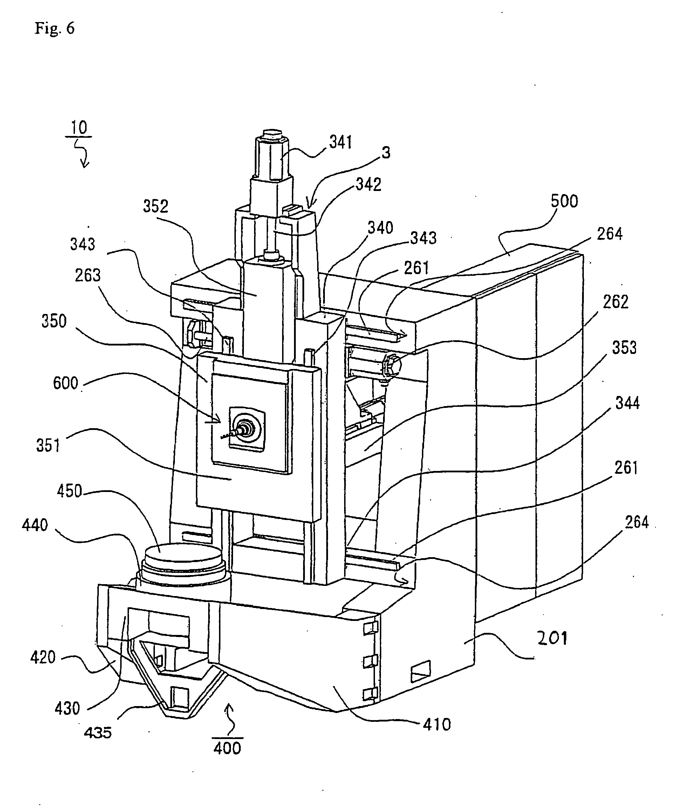

Another embodiment will be explained with reference to Fig. 6. As for a machine tool 10 of this embodiment, the sliding mechanism from the base 201 to the machining head 600 is laminated in order of an X slide 340, a Y slide 350 and a Z slide. Another structure is same as the former embodiment.

The X slide 340 is formed in a lengthwise rectangle frame. Plural guide blocks 344 for engaging on the upper and lower guide rails 261 extending in the X axis direction laid on the base 201 are installed on the back surfaces of left and right vertical beams and support the X slide 340 slidably in the X axis direction for the base 201. Besides, a nut body (not illustrated), which is screwed on a screw shaft 263 of a servomotor 262 laid on the base 201, is provided on the back surface of the upper lateral beam portion of the X slide 340.

Guide rails 343 extending in the Y direction are laid on the front surfaces of the left and right vertical beams of the X slide 340, respectively. A servomotor 341 is installed on the upper portion of the X slide 340 to rotate a screw shaft 342 extending in the Y direction.

The Y slide 350 is installed on the front surface of the X slide 340. The Y slide 350 comprises a front board 351 formed in a lengthwise rectangle and a box frame 353 having a generally U letter shape with opening upwardly The box frame 353 is integrated with the front board 351 and extends rearward from the center of the back surface.

Plural Y-axial guide blocks (not-illustrated) are installed at four corners of the back surface of the front board 351 of the Y slide and supported slidably in the Y axis direction by engaging with guide rails 343 laid on the front of the vertical beams of the X slide 340 respectively A nut body 352 is provided on the upper part of the back surface of the front board 351 to screw on the screw shaft 342.

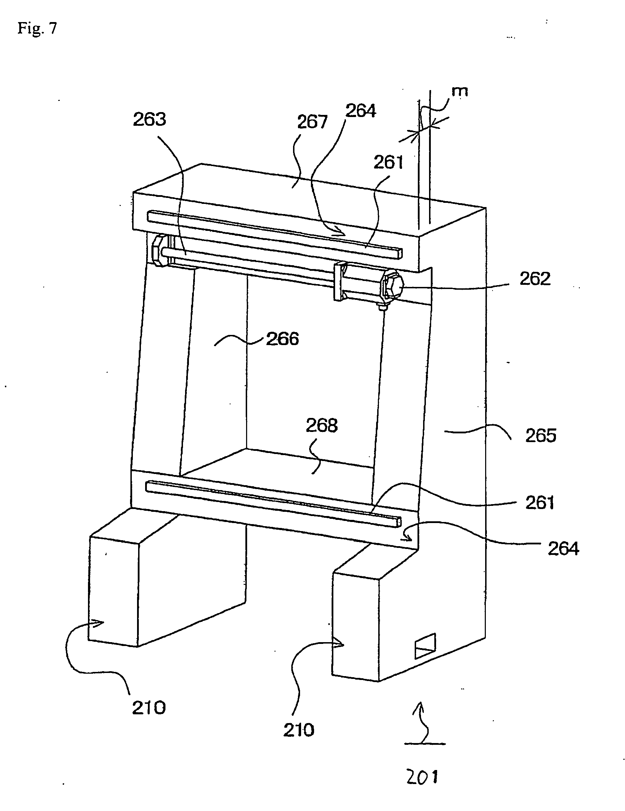

Fig. 7 is a perspective view of the base 201. The base 201 has structures 265, 266 each having large mass installed upright on the left and right sides like the base 200 of the former embodiment, wherein the structures 265, 266 are connected with the upper and lower lateral beam portions 267, 268. The lateral beam portions 267, 268 are respectively formed in a board having high rigidity in comparison with the lateral beam portions 250, 260 (Fig. 3). Each of the lateral beam portions 267, 268 has a vertical surface 264 on the front as a reference plane. The whole base 201 is a casted structure. The vertical surfaces 210 which are the same as those of the former base 200 are provided to the lower portions of the left and right structures 265, 266. This embodiment is different from the former embodiment in that upper vertical surfaces 264 are provided to the lateral beam portions 267, 268 sides. Although a vertical surface 264 of the lateral beam portion 267 is located on the same Z surface as the vertical surface 264 of the lateral beam portion 268, a portion just under the vertical surface 264 caves backward in the Z axis direction by an interval of "m" to accommodate a servomotor 262. The upper and lower vertical surfaces 264 have rails 261 for guiding the X slide 340 in the X direction, respectively.

In this embodiment, the structures 265, 266 are in existence at both ends of the guide rails 261 in the X direction, and thereto, the vertical surfaces 210 are provided. Therefore, like the former embodiment, the left and right beam portions 410, 420 can be connected so as to extend forward-upwardly from the left and right vertical surfaces 210. Accordingly, just like the base 200, because the beam portions 410, 420 can widen an interval from an end to an end of the left and right guide rails 261, the opening of the space for dropping the cutting chips can be enlarged. That is, since the space 600a reaching the floor just under the machining head 600 is formed by the left and right beam portions 410, 420 and the lateral beam portion 430, the cutting chips can be easily discharged.

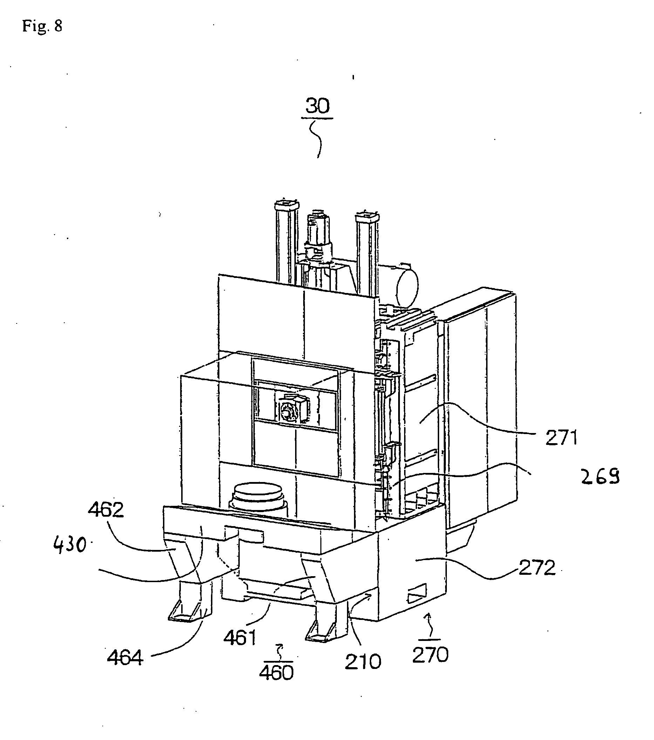

Fig. 8 shows a machine tool 30 of another embodiment. In this embodiment, a base 270 is vertically divided. A lower base 272 has the vertical surface 210 on which beam portions 461, 462 of a beam 460 are installed, like the former embodiment. The beam in Fig. 8 is different from the beam of the former embodiment in a method of extending form the vertical surface. That is, although the beam portions 410, 420 of the machine tools 1, 10 extend toward the centers of the machine tools, respectively, the beam portions 461, 462 extend forward in the Z direction. Therefore, this machine tool can deal with a large and long work. A prop 464 is provided to each of the lower portions of the beam portions 461, 462 toward the floor on which the machine tool 30 is installed to support the weight of the machine tool 30. However, since the weight of the machine tool 30 is basically held by the bottom surface of the base 270 side, the prop 464 in front of the vertical surface 210 serves as a spare.

The lower base 272 is a casted structure (or made of steel boards) for connecting the structures of both sides with the lateral beam portion so as to form an H letter shape in a view from the front. Top surfaces 269 of the structures are level surfaces, and thereon, an upper base 271 is installed. Here, the upper base 271 is installed so as to cave backward behind the top surface of the lower base 272.

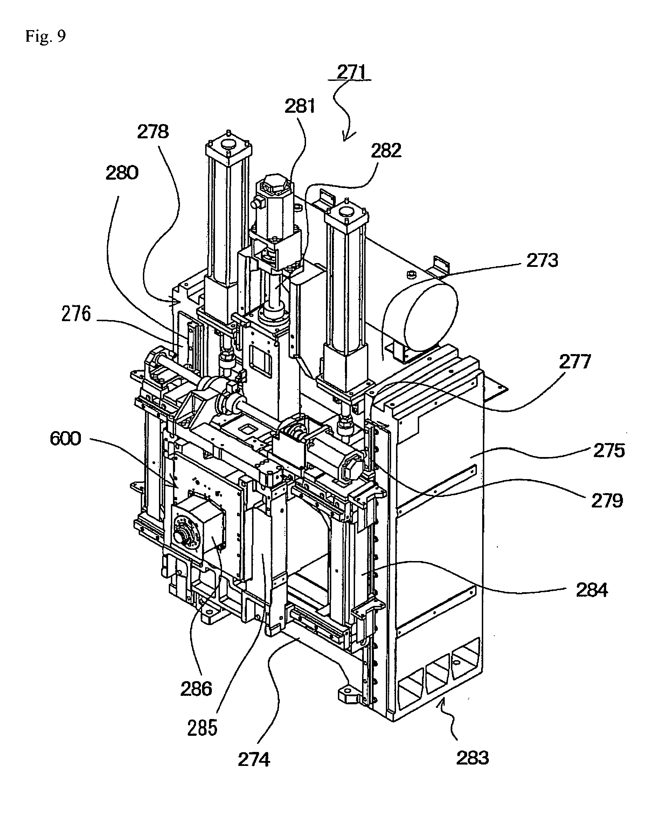

Fig. 9 shows the upper base 271 and the sliding mechanism 300. The base 271 is formed in a rectangular frame with more frontage than depth having a through hole at the center in a view from the front, and upper and lower both ends of the left and right vertical beam portions 275, 276 each having a quadrangle section are connected with the lateral beam portions 273, 274. The front surfaces of the vertical beam portions 275, 276 form vertical surfaces 277, 278, and thereon, left and right guide rails 279, 280 extending in the Y axis direction are laid. A servomotor 281 having a Y-axial screw shaft 282 is provided on the lateral beam portion 273. The machining head 600 is operated longitudinally, laterally and vertically through the Y slide 284 and the X slide 285. A bottom surface 283 of the base 271 is a level surface, fixed on the top surface of the base 272 with the bolts to form the base 270 as one body.

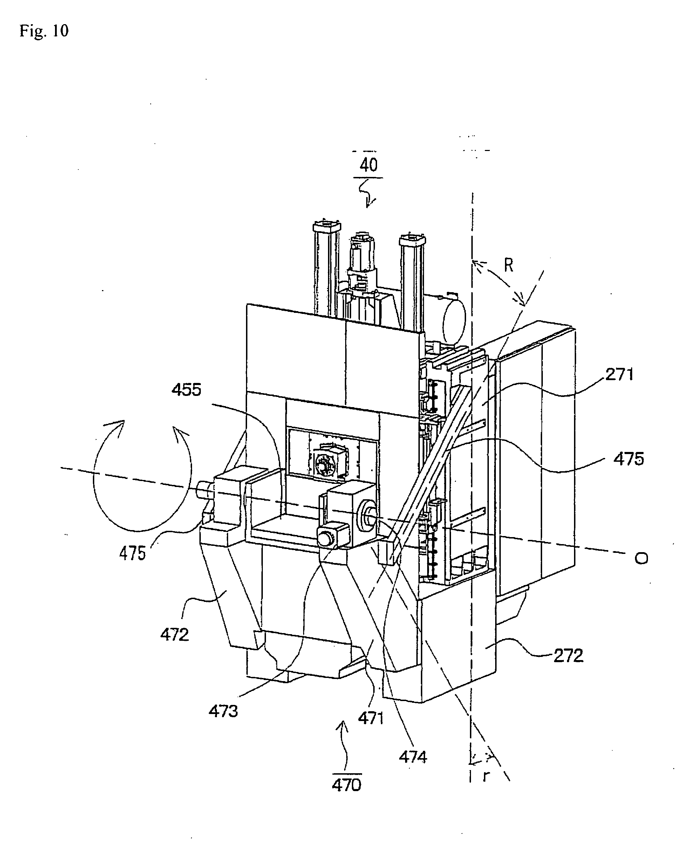

Fig. 10 shows a machine tool 40 of another embodiment. Abeam 470 of the machine tool 40 has a table 455 rotatable around an X-axial shaft O. Beam portions 471, 472, just like the embodiment of Fig. 8, extend forward in the Z direction, and their tops are supported by one ends of left and right arms 475. The other ends of the arms 475 are fixed on the upper portion of the vertical beam of the base 271. In this case, an angle "R" which is formed by a vertical line and an imaginary line for linking a junction between the arms 475 and the beam portions 471, 472 and a junction between the arms 475 and the base 271 is made an acute angle. In the figure, the imaginary line is shown in a broken line on the base 271 and the arm 475. An angle "r" which is formed by a vertical line and an imaginary line for linking the junction between the arms 475 and the beam portions 471, 472 and a junction between the beam portions 471, 472 and the base 272 is also made an acute angle. In the figure, these lines are shown in broken lines on the base 271 and the beam portions 471, 472. A servomotor 473 is fitted on the upper end of the beam portion 471 to rotate a shaft 474 around the O shaft. According to this, the table 455 can be rotated around the shaft O in the left and right direction.

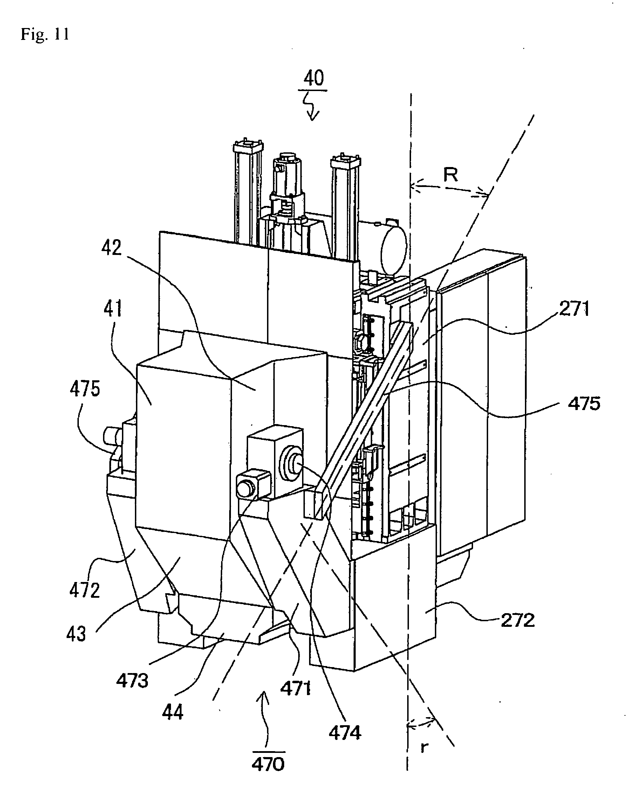

Fig. 11 is a perspective view wherein the machining chamber is provided to the machine tool 40. In the former embodiments, components of the beam except the table 450 are provided outside the machining chamber. However, in the machine tool 40, a hole through which a rotating shaft 474 passes from the left and right beam portions 471, 472 is provided to each side wall 42 of the machining chamber. A front wall 41 of the machining chamber is extended below the table, connected to a wall 43 of the front bottom. The wall 43 slopes toward the base 272, reaching a hopper 44 for gathering chips so that the cutting chips can easily drop. Accordingly, the cutting chips of the machining head 600 may drop on the table 455. However, actually, the cutting chips splashed from the machining head 600 drop on the circumference around the machining head 600, and few cutting chips drop on the table 455. Besides, the cutting chips can not be accumulated because the table 455 can be rotated.

Next, a form that the beam portion extends will be explained. The beam portion is extended in a triangular shape (or a trapezoid shape) or in a quadrangular shape in a view from the top. Since the machining head 600 acts vertically, laterally and longitudinally to the table 450, its reaction is added on the beam portions and the lateral beam portion.

In the machine tool 30 (Fig. 8), the beam portions extend forward in the Z direction from the vertical surface below the base, and the vertical surface of the base is opposed to a stress which is added to the Z direction. On the other hand, in the machine tools 1, 10 (Figs. 1, 6), the beam portions extend diagonally-forward for the table from the vertical surface below the base.

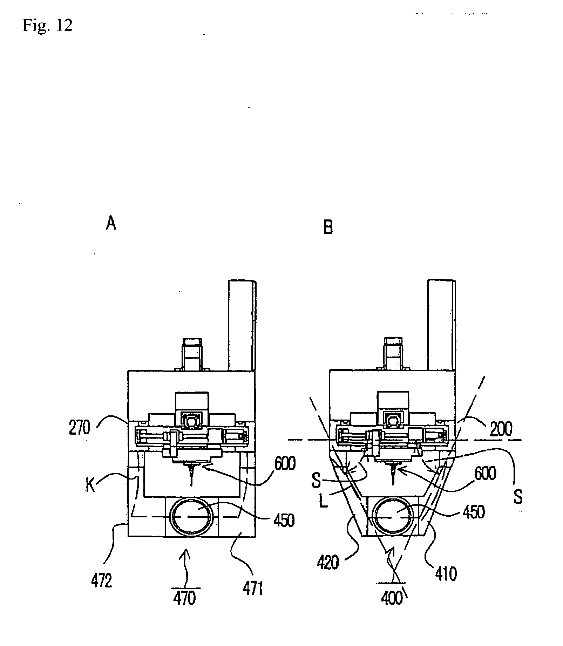

Fig. 12 shows a shape of the beam in a view from the top. In the beam 470 of Fig. 12A, the beam portions 471, 472, the lateral beam portion and the base 270 form in a quadrangle. A reference mark "K"' shows a transformation of the beam 470 at the time when the force acting on the table 450 acts on the X direction. On the other hand, in the beam 400 of Fig. 12B, lines extending the left and right beam portions extended forward-upwardly from the vertical surface of the base 200 cross each other in a view from the top. When a triangle formed by making crossed points vertexes is an isosceles triangle whose two interior angles are shown in "S", a transformation of the beam 400 in case the same force is added on the table 450 is shown in "L". Obviously in the figures, the shape of the beam 400 has less transformation of the beam portions at the time when the force is added on the table. Because both of beams extend from the both ends of the base, a large opening is spread to the bottom just under the machining head 600.

Although the Z slide moving the machining head longitudinally is made the last stage in the above-mentioned embodiments, it may be made the first stage. Concretely, in Fig. 8, in stead of the Z slide 286, the guide rails of the Z direction are provided on the top surface 269 of the base 272 and the base 271 is changed in a column for moving longitudinally. In this case, because the mass of longitudinally moving members is increased, the weight must be selected so as not to position the center of gravity of the machine tool outside of an area surrounded by the legs arranged at the four corners.

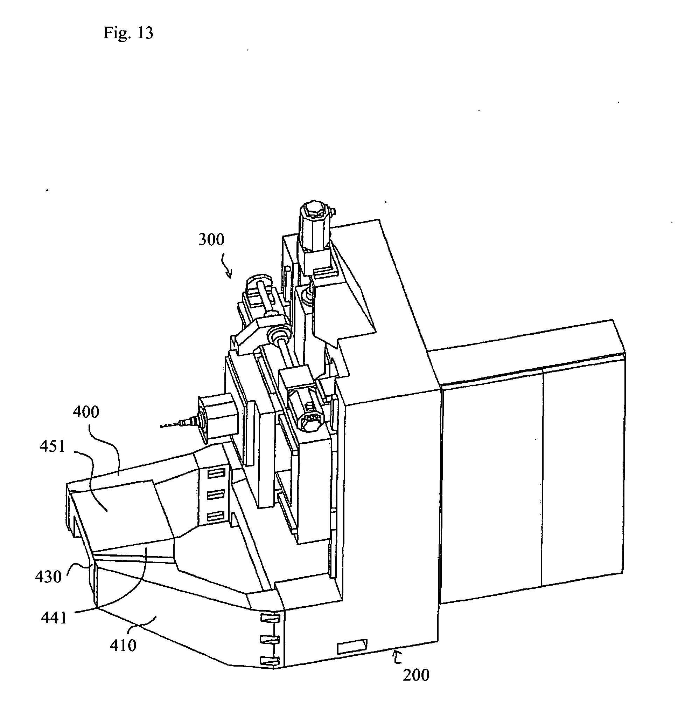

Fig. 13 shows a machine tool in which the table 450 is fixed. A fixing table 451 for installing a work is provided near the center of the lateral beam portion 430. The top surface of the lateral beam portion 430 slopes downward the base 200. In also the machine tool, in installing the machining chamber, the top surface of the fixing table 451 is exposed into the machining chamber on a border of the side 441 of the fixing table 451. Just like the embodiment of Fig. 1, the beam portions 410, 420 and the lateral beam portion 430 are provided outside the machining chamber.

## Claims

1. A machine tool comprising:
a machining head (600) for cutting a work;
a sliding mechanism (300) for moving said machining head (600) vertically, laterally and longitudinally whereas maintaining said machining head (600) facing toward a horizontally longitudinal direction (Z); **characterized in that** it further comprises
a base (200; 201; 270) constituted by connecting structures (230, 240; 265, 266) installed upright on left and right sides with use of lateral beams (250, 260; 267, 268; 273, 274), having a first reference plane (220; 264) for loading guide rails (221) for guiding the sliding mechanism (300), besides having second reference planes (210) on fronts of the left and right side structures (230, 240; 265, 266);
a table (450; 455) installed in front of said left and right second reference planes (210), supporting a work to be cut by the machining head (600); and
a beam (400; 460; 470) extending forward from the second reference planes (210), holding the table laterally.

2. The machine tool according to claim 1, wherein said structures (230, 240; 265, 266) respectively have the first reference plane (220; 264) on the front thereof and have a depth (M, N) in the longitudinal direction longer than a width (T) of the first or the second reference planes (220, 210; 264) in the lateral direction.

3. The machine tool according to claim 1 or 2, wherein said structures have the first reference plane (220; 264) to the depth side of the second reference planes (210) in the longitudinal direction (Z).

4. The machine tool according to any one of claims 1 to 3, wherein said sliding mechanism (300) is constructed so that driving systems for moving vertically, laterally and longitudinally for the first reference plane (220; 264) are laminated from the first reference plane (220; 264) to the machining head (600), wherein a driving system for moving longitudinally is laid on an uppermost layer.

5. The machine tool according to any one of claims 1 to 4, wherein said structures (230, 240; 265, 266;) are connected by at least two lateral beams (250, 260; 267, 268; 273, 274) which are laterally bridged, said first reference plane (220; 264) is fixed on the fronts of upper and lower lateral beam portions (250, 260; 267, 268; 273, 274) and said guide rails (221) are extended along a length direction of the first reference plane (220; 264) and said sliding mechanism (300) is laid on a lowermost layer.

6. The machine tool according to any one of claims 1 to 5, wherein said structures (230, 240; 265, 266) have the first reference plane (220) on a horizontal plane and said sliding mechanism has the driving system for moving vertically laid on the lowermost layer.

7. The machine tool according to any of claims 1 to 6, wherein said beam (400; 460; 470) comprises left and right beam portions (410, 420; 461, 462; 471, 472) for extending forward from the second reference planes (210) and a lateral beam portion (430) for connecting tips of the left and right beam portions (410, 420; 461, 462; 471, 472), and said table (450; 455) is installed on the lateral beam portion (430).

8. The machine tool according to claim 7, wherein said machine tool further has a machining chamber (700), said machining chamber (700) comprises a main surface (710) of the base side, left and right side surfaces (713, 42) inside the left and right beam portions (410, 420; 461, 462; 471, 472), and a wall surface (714; 43) for leading from the front of the table (450; 455) to a lower portion inside the lateral beam portion (430) as exposing the table (450; 455) into the machining chamber (700) and passing through the lateral beam portion (430).

9. The machine tool according to claim 7 or 8, wherein said left and right beam portions (410, 420) extend from the base (200) so that extensions from the beam portions (410, 420) cross each other in a view from the top.

10. The machine tool according to claim 7 or 8, wherein said machine tool has arms (475) for connecting the base (271) and upper ends of the beam portions (471, 472) at left and right sides, and a tip that links the connected points is an acute angle (r, R) for a vertical line.

11. The machine tool according to any one of claims 1 to 9, wherein props (435, 464) are provided in front of the second reference planes (210) of the base (200) toward a floor on which the machine tool is installed.

## Patentansprüche

1. Werkzeugmaschine, mit
einem Bearbeitungskopf (600) zum Spanen eines Werkstücks,
einem Verschiebemechanismus (300) zum vertikalen, lateralen und longitudinalen Bewegen des Bearbeitungskopfes (600), wobei der Bearbeitungskopf (600) währenddessen so gehalten wird, dass er in Richtung einer horizontalen Längsrichtung (Z) zeigt,
**dadurch gekennzeichnet, dass** sie weiter aufweist
eine Basis (200; 201; 270), die durch Verbinden von Strukturen (230, 240; 265, 266), die aufrecht auf der linken und rechten Seite unter Verwendung von Querträgern (250, 260; 267, 268; 273, 274) aufgestellt sind, gebildet wird, die eine erste Bezugsebene (220; 264) zum Bestücken mit Führungsschienen (221) zum Führen des Verschiebemechanismus (300) aufweist, die außerdem zweite Bezugsebenen (210) an den Vorderseiten der links- und rechtsseitigen Strukturen (230, 240; 265, 266) aufweist;
einen Tisch (450; 455), der vor der linken und rechten zweiten Bezugsebene (210) installiert ist und ein Werkstück, das durch den Bearbeitungskopf (600) gespant werden soll, hält; und
einen Träger (400; 460; 470), der sich nach vorne von den zweiten Bezugsebenen (210) erstreckt und den Tisch seitlich hält.

2. Werkzeugmaschine nach Anspruch 1, bei der die Strukturen (230, 240; 265, 266) jeweils die erste Bezugsebene (220; 264) an ihrer Vorderseite aufweisen und eine Tiefe (M, N) in der Längsrichtung aufweisen, die länger als eine Breite (T) der ersten oder zweiten Bezugsebenen (220, 210; 264) in der Querrichtung ist.

3. Werkzeugmaschine nach Anspruch 1 oder 2, bei der die Strukturen die erste Bezugsebene (220; 264) auf der Tiefenseite der zweiten Bezugsebenen (210) in der Längsrichtung (Z) aufweisen.

4. Werkzeugmaschine nach einem der Ansprüche 1 bis 3, bei der der Verschiebemechanismus (300) so ausgebildet ist, dass Antriebssysteme zum vertikalen, lateralen und longitudinalen Bewegen für die erste Bezugsebene (220; 264) von der ersten Bezugsebene (220; 264) zu dem Bearbeitungskopf (600) aufeinander angeordnet sind, wobei ein Antriebssystem zum Bewegen in der Längsrichtung auf einer obersten Schicht liegt.

5. Werkzeugmaschine nach einem der Ansprüche 1 bis 4, bei der die Strukturen (230, 240; 265, 266) durch mindestens zwei Querträger (250, 260; 267, 268; 273, 274), die quer überbrückt sind, verbunden sind, die erste Bezugsebene (220; 264) auf der Vorderseite von oberen und unteren Querträgerbereichen (250, 260; 267, 268; 273, 274) festgelegt sind und die Führungsschienen (221) sich entlang einer Längsrichtung der ersten Bezugsebene (220; 264) erstrecken und der Verschiebemechanismus (300) auf einer untersten Schicht liegt.

6. Werkzeugmaschine nach einem der Ansprüche 1 bis 5, bei der die Strukturen (230, 240; 265, 266) die erste Bezugsebene (220) auf einer Horizontalebene aufweisen und der Verschiebemechanismus das Antriebssystem zum vertikalen Bewegen auf der untersten Schicht liegend aufweist.

7. Werkzeugmaschine nach einem der Ansprüche 1 bis 6, bei der der Träger (400; 460; 470) linke und rechte Trägerbereiche (410, 420; 461, 462; 471, 472), um sich nach vorne von den zweiten Bezugsebenen (210) zu erstrecken, und ein Querträgerbereich (430) zum Verbinden der Spitzen der linken und rechten Trägerbereiche (410, 420; 461, 462; 471, 472) aufweist, und der Tisch (450; 455) auf dem Querträgerbereich (430) installiert ist.

8. Werkzeugmaschine nach Anspruch 7, bei der die Werkzeugmaschine weiter eine Bearbeitungskammer (700) aufweist, wobei die Bearbeitungskammer (700) eine Hauptoberfläche (710) der Basisseite, linke und rechte Seitenoberflächen (713, 42) innerhalb der linken und rechten Trägerbereiche (410, 420; 461, 462; 471, 472), und eine Wandoberfläche (714; 43), die dazu ausgebildet ist, von der Vorderseite des Tisches (450; 455) zu einem unteren Bereich innerhalb des Querträgerbereichs (430) zum Freilegen des Tisches (450; 455) in die Bearbeitungskammer (700) und Durchführen des Querträgerbereichs (430) aufweist.

9. Werkzeugmaschine nach Anspruch 7 oder 8, bei die linken und rechten Trägerbereiche (410, 420) sich von der Basis (200) so erstrecken, dass Verlängerungen von den Trägerbereichen (410, 420) sich in einer Aufsicht überkreuzen.

10. Werkzeugmaschine nach Anspruch 7 oder 8, bei der die Werkzeugmaschine Arme (475) zum Verbinden der Basis (271) und obere Enden der Trägerbereiche (471, 472) an linken und rechten Seiten aufweist, und eine Spitze, die die verbundenen Punkte verbindet, einen spitzen Winkel (r, R) mit einer Vertikallinie ausbildet.

11. Werkzeugmaschine nach einem der Ansprüche 1 bis 9, bei der Stützen (435, 464) vor den zweiten Bezugsebenen (210) der Basis (200) in Richtung eines Bodens, auf dem die Werkzeugmaschine aufgestellt ist, vorgesehen sind.

## Revendications

1. Machine-outil comprenant :
une tête d'usinage (600) pour découper une pièce ;
un mécanisme coulissant (300) pour déplacer ladite tête d'usinage (600) verticalement, latéralement et longitudinalement tout en maintenant ladite tête d'usinage (600) tournée dans une direction longitudinale horizontale (Z) ; **caractérisée en ce qu'**elle comprend en outre
une base (200 ; 201 ; 270) constituée par raccordement de structures (230, 240 ; 265, 266) installées en position verticale sur les côtés gauche et droit au moyen de poutres latérales (250, 260 ; 267, 268 ; 273, 274), ayant un premier plan de référence (220 ; 264) pour des rails de guidage (221) de chargement afin de guider le mécanisme coulissant (300), ayant en outre des seconds plans de référence (210) sur les devants des structures latérales gauche et droite (230, 240 ; 265, 266) ;
une table (450 ; 455) installée devant lesdits seconds plans de référence gauche et droit (210), supportant une pièce à découper par la tête d'usinage (600) ; et
une poutre (400 ; 460 ; 470) s'étendant vers l'avant depuis les seconds plans de référence (210), supportant la table latéralement.

2. Machine-outil selon la revendication 1, dans laquelle lesdites structures (230, 240 ; 265, 266) ont respectivement le premier plan de référence (220 ; 264) sur leur partie frontale et ont une profondeur (M, N) dans la direction longitudinale plus longue qu'une largeur (T) du premier ou des seconds plans de référence (220, 210 ; 264) dans la direction latérale.

3. Machine-outil selon la revendication 1 ou 2, dans laquelle lesdites structures ont le premier plan de référence (220 ; 264) jusqu'au côté de profondeur des seconds plans de référence (210) dans la direction longitudinale (Z).

4. Machine-outil selon l'une quelconque des revendications 1 à 3, dans laquelle ledit mécanisme coulissant (300) est construit de telle sorte que des systèmes d'entraînement destinés aux déplacements verticaux, latéraux et longitudinaux pour le premier plan de référence (220 ; 264) soient stratifiés du premier plan de référence (220 ; 264) à la tête d'usinage (600), dans laquelle un système d'entraînement destiné au déplacement longitudinal est monté sur la couche la plus haute.

5. Machine-outil selon l'une quelconque des revendications 1 à 4, dans laquelle lesdites structures (230, 240 ; 265, 266 ;) sont raccordées par au moins deux poutres latérales (250, 260 ; 267, 268 ; 273, 274) qui sont pontées latéralement, ledit premier plan de référence (220 ; 264) est fixé sur les devants des portions de poutres latérales supérieure et inférieure (250, 260 ; 267, 268 ; 273, 274) et lesdits rails de guidage (221) s'étendent dans une direction longitudinale du premier plan de référence (220 ; 264) et ledit mécanisme coulissant (300) est monté sur la couche la plus basse.

6. Machine-outil selon l'une quelconque des revendications 1 à 5, dans laquelle lesdites structures (230, 240 ; 265, 266) ont le premier plan de référence (220) sur un plan horizontal et ledit mécanisme coulissant a le système d'entraînement destiné au déplacement vertical monté sur la couche la plus basse.

7. Machine-outil selon l'une quelconque des revendications 1 à 6, dans laquelle ladite poutre (400 ; 460 ; 470) comprend des portions de poutre gauche et droite (410, 420 ; 461, 462 ; 471, 472) qui s'étendent vers l'avant des seconds plans de référence (210) et une portion de poutre latérale (430) pour raccorder les pointes des portions de poutre gauche et droite (410, 420 ; 461, 462 ; 471, 472), et ladite table (450 ; 455) est installée sur la portion de poutre latérale (430).

8. Machine-outil selon la revendication 7, dans laquelle ladite machine-outil a en outre une chambre d'usinage (700), ladite chambre d'usinage (700) comprend une surface principale (710) du côté de la base, des surfaces latérales gauche et droite (713, 42) à l'intérieur des portions de poutre gauche et droite (410, 420 ; 461, 462 ; 471, 472), et une surface de paroi (714 ; 43) pour mener depuis le devant de la table (450; 455) jusqu'à une portion inférieure à l'intérieur de la portion de poutre latérale (430) lors de l'exposition de la table (450 ; 455) dans la chambre d'usinage (700) et du passage à travers la portion de poutre latérale (430).

9. Machine-outil selon la revendication 7 ou 8, dans laquelle lesdites portions de poutre gauche et droite (410, 420) s'étendent depuis la base (200) de telle sorte que des extensions des portions de poutre (410, 420) se croisent l'une l'autre dans une vue de dessus.

10. Machine-outil selon la revendication 7 ou 8, dans laquelle ladite machine-outil a des bras (475) pour raccorder la base (271) et les extrémités supérieures des portions de poutre (471, 472) sur les côtés gauche et droit, et une pointe qui relie les points raccordés selon un angle aigu (r, R) depuis une ligne verticale.

11. Machine-outil selon l'une quelconque des revendications 1 à 9, dans lequel des étançons (435, 464) sont aménagés devant les seconds plans de référence (210) de la base (200) vers un sol sur lequel la machine-outil est installée.
